# EUROPEAN PATENT SPECIFICATION

(11) **EP 0 406 984 B1**
(45) Date of publication and mention of the grant of the patent: **26.06.1996**
(21) Application number: 90202276.3
(22) Date of filing: 27.11.1985
(51) Int. Cl.: G06K 1/12, G06K 5/02, B41J 29/38

(54) **Self-correcting printer-verifier**
Einrichtung zum selbstkorrigierenden Überprüfen eines Druckers
Dispositif pour la vérification autocorrectrice d'une imprimante

(30) Priority: 30.11.1984 US 676571
(43) Date of publication of application: 09.01.1991
(62) Divisional of application: 85308613.0
(73) Proprietor: TOHOKU RICOH CO., LTD., Shibata-Gun, Miyagi Prefecture 989-16 (JP)
(72) Inventor: Ulinski, Richard J., Sr., Arcadia, California 91006 (US); Clarke, Hugh C., Arcadia, California 91006 (US); Evers, Richard A., Monrovia, California 91016 (US); Stevens, Richard N., Monrovia, California 91016 (US)
(74) Representative: Senior, Alan Murray

(56) References cited:
- DE-A- 2 605 602
- FR-A- 2 234 993
- GB-A- 2 077 970
- US-A- 4 048 494
- US-A- 4 422 376

## Description

The present invention relates to the art of printing, and more particularly to apparatuses and methods for printing and verifying the precision of bar codes.

Bar codes in various forms are now familiar as identifying and pricing indicia for various commodities and material; and are used to record pricing information and material handling and locating information on commodities and products in application as varied as grocery store checkouts and inventory control. Bar codes typically comprise vertical bars of dark, non-reflective lines of varying widths interspaced by highly light-reflective spaces of varying widths. A group of such bars and spaces, representing a "symbol" is scanned by optical scanners reflecting light off the bars and spaces to photodetectors which distinguish the difference between the dar bars and the reflective spaces and of their reflective widths.

It is a desired objective to have bar code printers automatically positioning the edge of labels to be printed in such a printing and verifying printer.

GB-A-2 077 970 discloses a label printer on which the precharacterising portion of claim 1 is based. It includes a label detector which optically detects the presence of labels on a backing sheet by comparing the opacity with a reference opacity. The reference opacity is measured off the sheet itself to provide self-calibration.

US-A-4 422 376 also discloses a label printer with a label detector.

According to the present invention, there is provided a method of determining in a printer the leading edge of each of a series of successively positioned labels, and moving the labels into position adjacent printing elements within the printer, comprising the steps of moving each label successively through a first light path comprised of a first light source and a first photodetector capable of detecting light through the label; producing a first electrical signal representative of the change in opacity when an edge of a label is moved through the first light path; producing a second electrical signal and comparing the first electrical signal with the second electrical signal, and initiating a print operation routine to operate the printer to print indicia on said label when said label is positioned adjacent the printing elements; characterised in that said second electrical signal is produced by moving said label through a second light path spaced from said first light path in the direction of label movement and comprised of a second light source and a second photodetector capable of detecting light through said label, said second electrical signal being representative of the change in opacity when said edge of said label is moved through the second light path; and in that a digital initiate signal for initiating the print operation routine in a control processor is produced from said first and second electrical signals by comparing the instantaneous values of the first and second electrical signals to obtain a difference signal resulting from the time delay between the changes in opacity caused by the edge of the label interrupting the first and subsequently the second light path.

Further optional features of the invention will now be briefly described.

In one embodiment, differential voltage signals resulting from the initial passing of the leading edge through the first, but not the second of the detectors generates a differential signal from a differential amplifier, which signal is
shaped and amplified to form the digital signal to a print control processor for advancing the label on the extended sheet through the thermal printer, and for initiating the print cycles at the correct time when the label is properly positioned juxtaposed the printing elements of the thermal printer.

A transport assembly holding a paper path tray and drive rollers is capable of movement in order to present easy access to the print area and to the area through which the paper must be initially fed. When moved into the print position, the transport assembly can be latched into place, and the print head can be variably positioned so as to apply more or less pressure against the sheets to be printed. A control panel and readout display provide operational accessibility to the functioning of the printer and verifier.

Integral with the printer is an optical scanner positioned to transversely scan the sheet subsequent to the printing operation. The scanner and printer are controlled by a master control processor, in turn controlling a scanner control processor and a print control processor. By use of stepper motors, two drive rollers advance the sheet so that the area, such as the label to be imprinted is precisely positioned juxtaposed printing elements of a thermal line printer. The printing elements or pixels on the print head are driven by print head drivers controlled by the print control processor in the control system Data is input to a master control processor from a disk terminal or other computer, and a label description buffer is created so that the master control processor can set up the printer control processor.

The invention will be further described by way of non-limitative example with references to the accompanying drawings, in which:-
Figure 1 is perspective view of a printer and verifier of the preferred embodiment of the present invention.
Figure 2 is another perspective view of the printer and verifier of Figure 1, having certain elements removed and other cut-away for clarity;
Figure 3 is a detailed perspective view of the scanning head and printing elements of the embodiment of Figure 1;
Figure 4 is a side elevational, cross-sectional view of the optical scanning head of Figures 2 and 3;
Figure 5 is a perspective view of the print head;
Figure 6 is a detailed side elevation view of the pressure setting arm of the embodiment of Figure 1;
Figure 7 is a front elevation view of the sprocket and label edge detector;
Figure 8 is a perspective view of the sprocket and label edge detector of Figure 7, showing the interior detector elements and the overall casing in broken line for clarity;
Figure 9 is an electrical schematic design of the sprocket and label edge detector circuit;
Figure 10 is a block diagram of the operation of the embodiment; and
Figure 11 is a block schematics diagram of the control system.

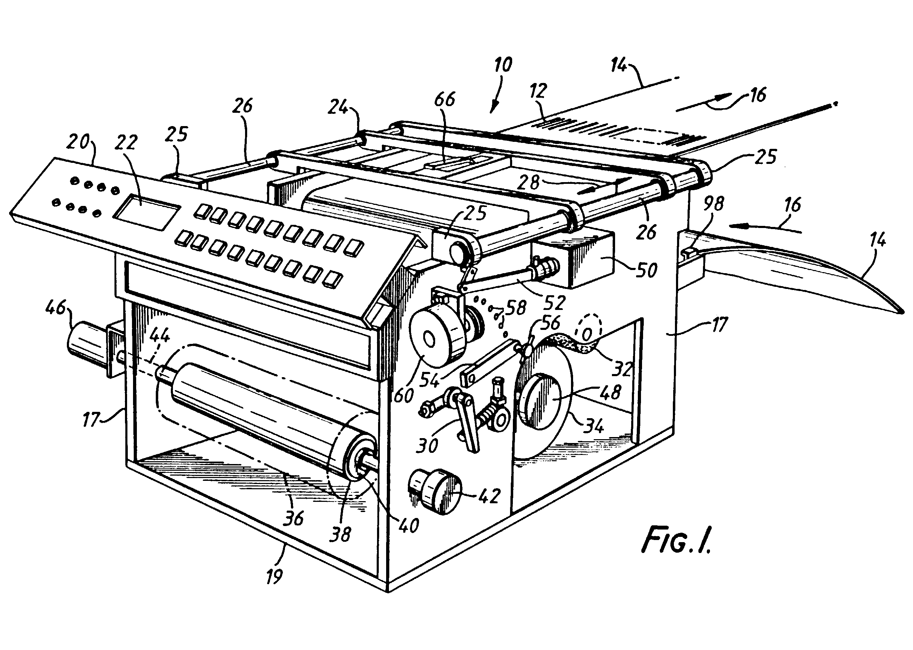

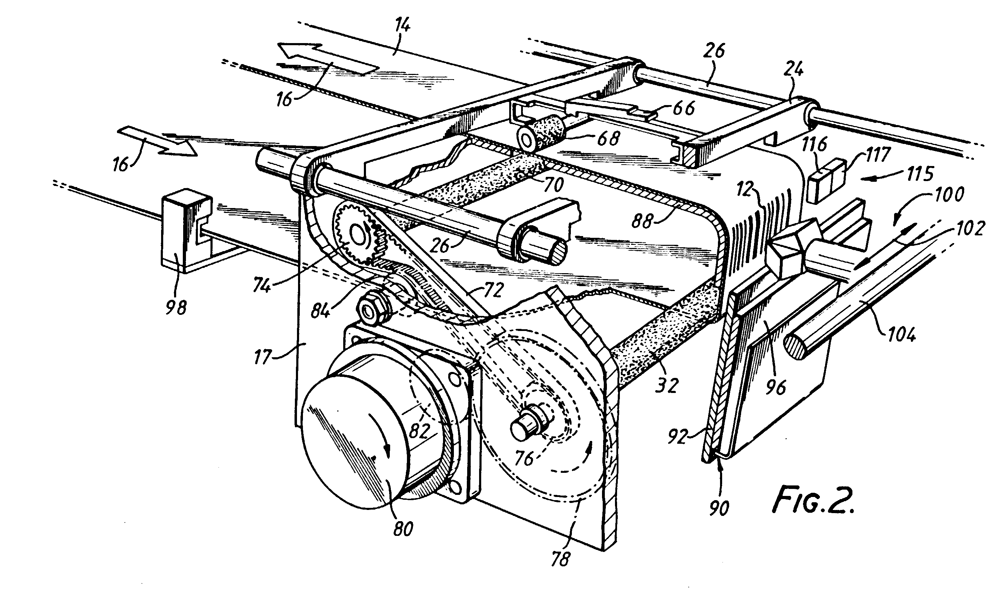

Initially referring to Figures 1 and 2 of the drawings, a self-correcting printer and verifier 10 for printing indicia, such as a bar code 12 on a longitudinally extended sheet 14 is depicted in perspective view. The sheet 14 travels in the direction of arrows 16 through the printer-verifier 10 from a row or a fanfolded stack of edge connected sheets forming an indeterminate length of paper, often times sprocketed on the linear edges for advancement by sprocket wheels. The paper may be thermally sensitive paper of the kind which, when a certain level of heat is applied adjacent the paper will form marking or printing on the paper. As will be explained in greater detail below, other types of paper may also be used, such as an extended sheet of backing having a series of successive gummed labels mounted on it.

The printer and verifier 10 is comprised of printer chassis sidewalls 17 and a chassis base 198 in effect housing many of the operative elements, and providing mounting for substantially all of the elements. To the front of the printer 10, a control and display panel 20 including a read-out digital display 22 is shown.

A paper transport assembly 24 is shown movably mounted to the chassis sidewalls 17 on rails 26 to move forward and rearwardly in the direction of double arrow 28. The rails 26 are connected to the sidewalls 17 by chassis mounts 25. The transport assembly 24 may be secured in the forward or operating position by a convenient latching system, not shown which is released by latch lever 30.

A print head platen 32 is mounted to the transport assembly 24 for driving the paper 14 in the paper path, which will be explained in greater detail shortly. Mounted between the sidewalls 17, as depicted in Figure 1 is a roll 34 of thermal printing ribbon 35 which is fed from a spool about which it is wrapped, to the take-up roll 36 for the printing ribbon, wrapped around spool 38.

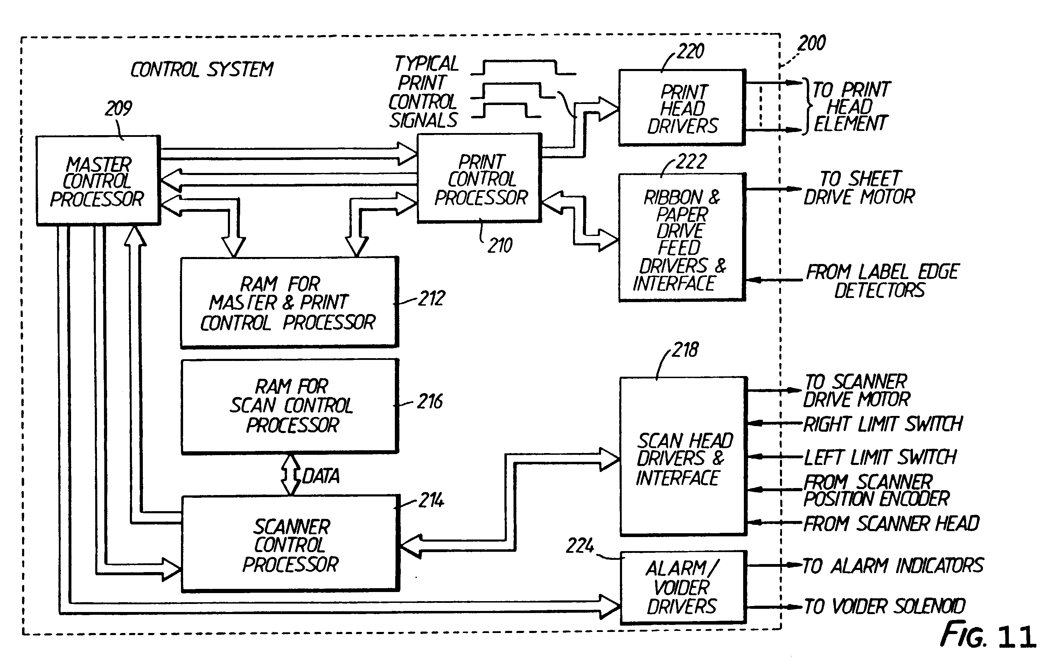

The ribbon take-up roll spool 38 is held between the sidewalls 17 on one side by a ribbon take-up roll mandrel or cone 40, manipulated on the outside of the wall 17 by mandrel knob 42, and on the other side of the spool 38 by a mandrel or cone capable of being driven by shaft 44. The shaft 44 is driven by a ribbon tension servo 46. The motor current to the servo 46 is controlled by a signal responsive to a sensing of the tension of the printing ribbon 35, as more fully explained with reference to Figure 11, below.

The roll 34 of the printing ribbon 35 is similarly held between the sidewalls 17. On one side, as seen in Figure 1, the ribbon mandrel or cone 48 engages the roll spool, and allows for relatively free rotation of the roll 34.

A solenoid 50 is connected by solenoid linkages 52 to drive a "void" stamp, as will be explained in greater detail below.

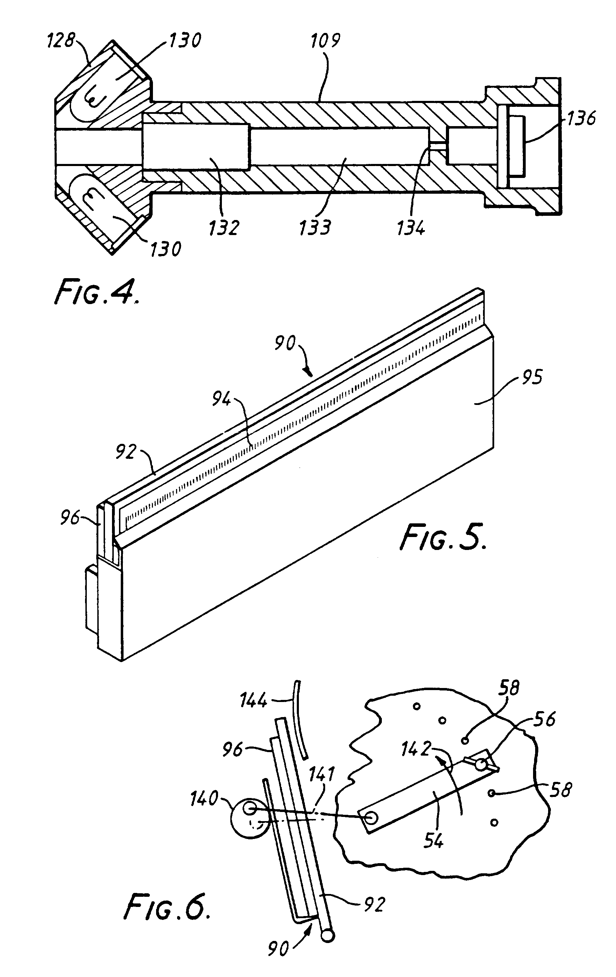

A print head pressure setting arm 54 can be rotated about its spindle, and fixed by set screw 56 at various set notches 58 for controlling the pressure of the print head 90 (Figure 2) against the paper 14, as explained further in relation to Figure 6.

An optical head encoder 60 is mounted on a common shaft with a right optical head cable pulley 62 for providing accurate location information of a scanning head 100, again described in greater detail below.

A pinch roller lever 66 operates as a cam for a pinch roller 68 to pinch firmly the paper 14 between it and a paper tension drive roller 70 operably positioned in the transport assembly 24.

In Figure 2, the sheet advancing system is depicted in greater detail. A toothed timing belt 72 drives a sprocket wheel 74 which is axially connected to the paper tension drive roller 70. The timing belt 72 is driven by a gear 76, which is connected to another gear 78. The gear 78 is driven by a paper drive motor 80 through a gearing 82 connected to the shaft of paper drive motor 80. The gear 78 is axially connected to the print head platen 32 to provide the main driving force for the paper 14. An adjustable tension roller 84 is provided to control the tension of the toothed belt 72.

A paper path tray 88 is provided to guide the paper 14 along a proper paper path.

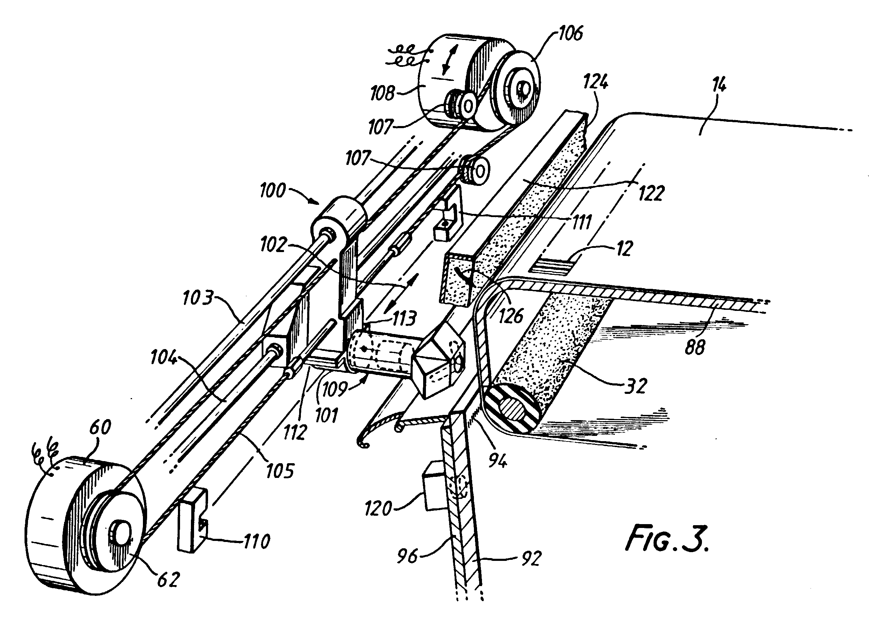

The print head 90, comprising a print head circuit board 92 holding the print elements 94 (Figure 3) and a head sink 96 is positioned in operable and printing relationship to the paper 14 opposite a vertical back wall of the tray 88.

A sprocket and label edge detector system 98 is depicted at a point at the beginning of the paper path where paper 14 enters into the paper transport assembly 24.

The scanning head 100 is movably positioned to read the bar code 12 printed on the paper 14 by traversing the lateral width of the paper 14 in the direction of arrows 102. As better seen in Figure 3, the scanning head 100 comprises an optical slide assembly 101 slidably mounted on rail 103 and stabilized by slider assist guide 104. An optical head cable 105 is connected to the optical slide assembly 101, and is looped around the head cable pulley 62 at the right end (as viewed from the front), and a head cable pulley 106 at the left end. Tensioning pulleys 107 are provided to maintain the head cable 105. The pulley 106 is mounted to the shaft of a scanner stepper drive motor 108.

An optical head or block 109 is mounted within the optical slide assembly 101.

Limit switches 110, 111 are positioned at each end of the scanner traverse path 102. Each limit switch 110, 111 comprises a vertical light path, having a light emitting diode (LED) light source and a photodetector. The light path is positioned to be interrupted by one or the other of two flanges 112, 113 flaring from the optical slide assembly 101. The controller for the optical slide assemble receives the signal resulting from the interruption of the light path in either of the limit switches 110, 111, and stops the transverse of the scanner head 100. In the case of the left limit switch 111, the scanner head traverse is reversed, and the scanner head 100 commences a selective reverse scan of the printed matter. The scanner head 100 upon return to the right side stops upon interrupting, by its right flange 112 the limit switch 110, in its nesting position.

A calibration plaque 115 (Figure 2) is provided having both a standard darkness area 116 and a standard reflective area 117. The dark area 116 is designed to reflect only two percent (2%) of light focused on it, while the highly reflective area 117 should reflect approximately 80% of light focused upon it. The calibration plaque 115 can be used, when the scanning head 100 is in its nesting position, to test or verify the operation of the light path and of the scanning and reading circuits. Additionally, the light reflectivity sensitivity of the scanner's photodetectors can be calibrated from the reflective plaque 117.

A ribbon strip plate 118 (shown and described in detail in relation to Figure 11) is provided with an articulated tensioning arm 119 to guide the thermal printing ribbon 35, if used, from the paper 14 after a printing step.

The tensioning arm 119 can provide, further, a signal to control the direct current ribbon tension servo 46, as will be explained more fully with reference to Figure 11.

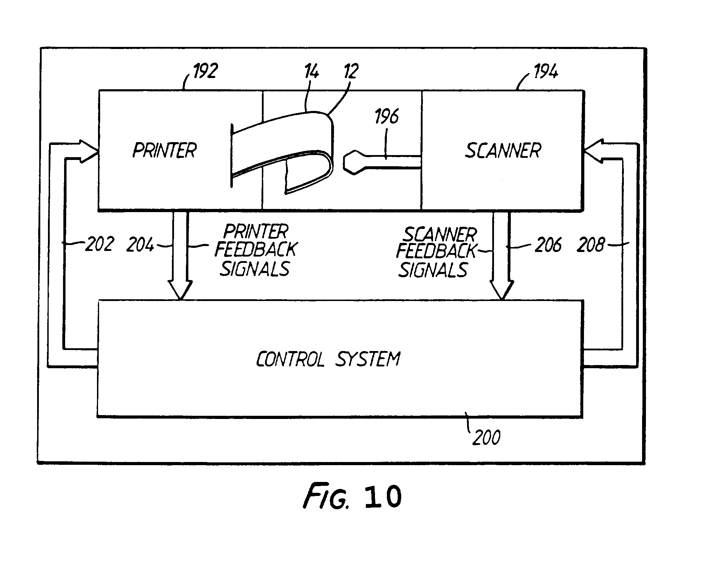

A "void" stamp or marker 112 (Figure 3) comprises an ink pad 124, and is mounted to move in the direction of arrow 126 to engage the paper 14, as will be more fully explained with respect to Figure 10. A thermistor 120 (also Figure 3) is mounted to the heat sink 96 for use in temperature stabilization of the print head 90. Temperature control by sensing the heat sink temperatures is possible.

In Figure 4, the optical head or block 109 is shown in cross-section elevation. A light source mounting block 128 houses three light emitting diodes (LED's) providing light. Lens 132 is movably set within the light path 133. The lens may be fixed in any conventional manner as by a set screw, for example. The block 109 comprises, in additicn, an aperture 134 for controlling flare of the light within a path 133. A photodetector 136 is at the end of the light path 133 to detect the contrast between the reflective and non-reflective surfaces scanned. The light source mounting block 128 is a press-fit cnto the optical block 109 in order to align the LED's 130 to the sheet 14 to be scanned, and to provide access to the lens 132 for movement in order to focus the image along the light path 133. The number of LED's is not crucial but it is desirable for a sufficient number of them to be used to diffuse the illumination and make the light reflected independent of paper peculiarities, such as grain.

In Figure 5, the print head 90 is depicted. The print head circuit board 92 contains the printing elements or pixels 94. In the preferred embodiment, 1728 pixels are linearly arranged along a single line at a distance of 0.5 mils (0.018mm) apart, each pixel having a width of approximately 0.5 mils (0.018mm). The heat sink 96 comprises a metal block which is mounted on the circuit board 92. There is a maximum area of surface-to-surface contact therebetween in order to have the greatest possible heat transfer. The thermistor 120 (Figure 3) may be used to monitor the temperature of the heat sink 96, and in turn the printing elements 94. A cover 95 (Figure 5) is shown covering the circuit board 92.

In Figure 6, the details of the print head pressure setting arrangement are depicted in cross-section elevation. The print head pressure setting arm 54 rotates about an axle 141 connecting the arm 54 to a cam 140, which engages a cover plate for the print head 90. When the arm 54 is rotated in the direction of the arrow 142, the printing end of the print head 90 is moved in the direction of arrow 144 into a greater pressure contact with the sheet 14. The arm 54 can be fixed in position by turning the set screw 56 into any of the notches 58, and thereby maintaining the desired pressure of the print head 90 against the sheet 14.

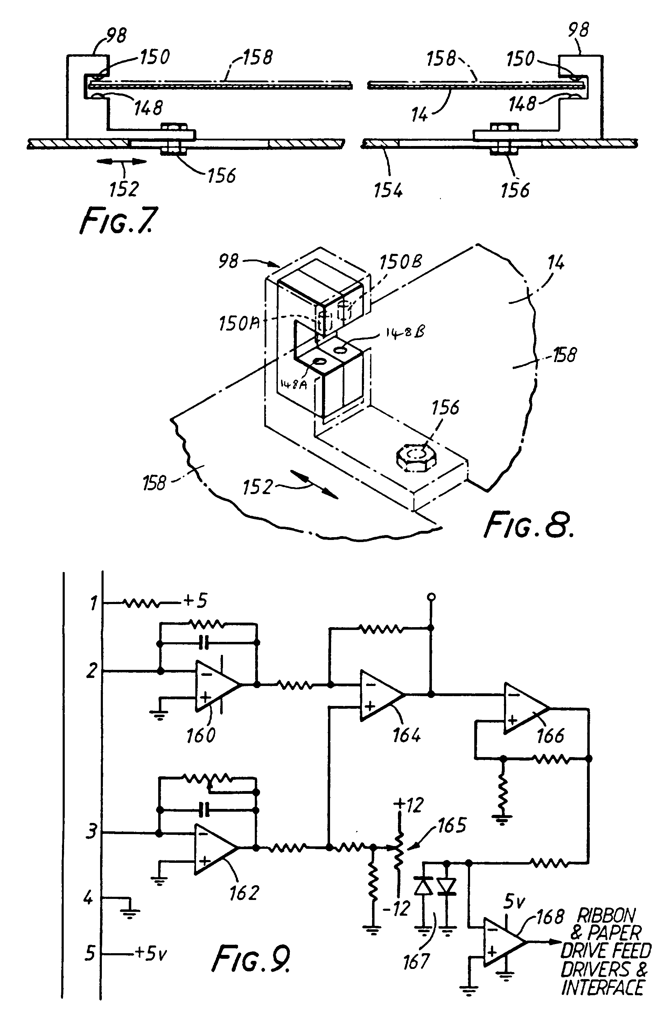

In Figures 7 and 8, the operation of the sprocket and label edge detector system is shown. The linear edges of the longitudinally extended sheet 14 pass between light sources, comprising LEDs 148 and photodetectors 150 shown in broken line in Figure 8. The edge detectors 98 can be moved horizontally along the directions of arrow 152 and fixed to the chassis frame 154 in relation to the sheet 14 by bolts 156.

Photodetectors 150A and 150B detect light from the respective sources 148A and 148B through the sheet 14. Whenever the opacity of the sheet changes, such as when the edge of a label 158 passes therethrough, the voltage level of the photodetectors 150A and 150B will alter. In its quiescent state, the voltage received by amplifiers 160 and 162 (Figure 9) from the photodetectors 150, representatively shown as points 2 and 3 in Figure 9, will be relatively comparable, and after amplification will provide comparable inputs to a difference amplifier 164. The comparator 164 will provide a low output to another amplifier 166 until the inputs of amplifier 164 are different. Upon detecting a difference of at least a value which is determined by a divider 165, the amplifier 164 gives a high output which is amplified by the amplifier 166. The amplifier 166 forms the signal more into a digital pulse, which after forming by diodes 167, is amplified to 5 volts by an amplifier 168 to produce a signal to the ribbon and paper drive feed drivers and interface 222 with a Print Control Processor (PCP) 210 (Figure 14). A control signal controlling the paper drive motor 80 thus is generated. In the control system, the paper stepper drive motor 80 then advances sheet 14 a predetermined distance calculated as the distance between the edge detector 98 and the point of engagement by the printing elements 94 to the sheet 14.

In operation, when an edge of a portion of sheet 14 having different opacity, such as the label 158, first interrupts the light path from the light source 148A to the detector 150A, the first amplifier 160 receives a different voltage input representative of the different opacity, causing in turn a high output signal from the differential amplifier 164. This output signal is eliminated when the voltage to amplifiers 162, 164 is changed by a certain amount predetermined by the divider 165, representing detection by the second photodetector 150B of the same leading edge of different opacity, such as the leading edge of the label 158. The output signal of differential amplifier 164 is then low. The signal briefly generated is formed through the amplifiers 166, 168 to result in a digital start signal to the print control processor to commence printing at a precisely clocked time subsequent to the receipt of the signal, calculated to be the precise time that the edge, or some set distance beyond the edge of the label 158 as it is advanced by the paper drive motor 80 to the paper path position opposite the printing elements 94.

Figure 10 is a block diagram which diagrammatically shows the inter-relationships between the major elements comprising the preferred embodiment. The self-correcting printer and verifier 190 includes a printer 192 for printing indicia, such as bar code symbols on a print medium such as the longitudinally extended sheet 14. The sheet 14 may include successive pages or may include successive spaced labels 158 imprinting thereon. Thus successive pages or labels of sheet may have corresponding successive fields of indicia printed thereon. The printed indicia 12 is read by a scanner 194 including a reading element 196. the printer 192 is controlled by a control system 200 by control signals directed along a path 202. Printer feedback signals may provide some information along a path 204 to the control system 200 to assist in controlling the printer 192 in its primary printing operations. The control system 200 also provides control signals along a path 208 to control and operate the scanner 194 to scan printed indicia at a time subsequent to its imprinting on sheet 14. the scanner 194 also produces scanner feedback signals applied to control system 200 along a path 206 which signals includes a scanner output signal representative of the scanned printed indicia and also may include encoded scanner position signals which gives control system 200 information as to the position along the line at which the scanner is reading. The control system 200 receives the scanner feedback signals along the path 206, and uses the scanner output signal to modify the printer control signals applied to the printer along the path 202 to modify, in turn, the characteristics of the printed indicia 12.

It should be noted that the control system 200 controls the stepper motor 80 in its incremental advancement of sheet 14. The control system 200 will have received the edge or label detector sensing signal sensing the position of an edge, fcr example, and by sensing the incremental advances of the sheet 14, will have precise information of the location of an edge, including information of whether a label is located juxtaposed the printer head. In situations where the print operation creates its own printed edges or borders, the control system 200 will have the number o incremental advances beyond the end of the last edge so as to be able to locate precisely the beginning of the next succeeding label's leading edge.

In general, the printer 192 may or may not contribute printer feedback signals along the path 204 to the master control system 200. If a thermal printer is utilized, where the temperature of the printing elements are crucial, a temperature feedback signal may be returned which is generated by a thermistor mounted on the heat sink for the thermal print head and may be used to control energy applied to the printing elements, for example, by providing information for controlling the amplitude of a voltage pulse driving the printing element. Such temperatures feedback control is well known in the prior art but is extremely slow and delayed in operation because of the very large thermal time lags in a thermal print head.

In instances of printing on a series of spaced, removable labels mounted on sheet 14, the printer 192 may use a label edge detector to generate label edge feedback signals at the leading edge of such labels to communicate to the control system 200 the precise location of the label, so that the control system 200 can generate print commands when the label is correctly positioned in relation to the printing elements.

It can be appreciated, that thermistor generated temperature feedback signals may not be utilized when the printer 192 is not a thermal printer, for example if it is a laser printer. Similarly, label edge detector feedback may not be utilized if the printer is not printing on sheet carried labels or similar sections.

In Figure 11, a block schematic diagram of the control system 200 is shown. The control system 200 includes a master control processor (MCP) 209 and a print control processor (PCP) 210, which share a common random access memory (RAM) 212. The MCP 208 receives commands from a scanner control processor (SCP) 214, which has its own RAM 216. The SCP 214 is operatively connected to the scan head drivers and interface 218 from which emits the scanner drive motor control, and through which the SCP 214 receives information from the scanning head and the right and left limit signals from the limit switches. The scanner position encoder, such as the optical head encoder, generates signals interfaced by the scan head interface 218 to the SCP 214.

Information supplied through the interface 218 from the scanning head includes a scanner output signal representative of the reflectance (reflectivity) of scanned printed bars and spaces and thereby representative of the precise width of the printed bars, which information is prepared by the SCP 214 and transferred to the MCP 209 for comparison with prestored desired reflectances and dimensions for the scanned bars and spaces. The MCP 209 from such comparisons computes an averaged dimensional deviation for the scanned bars which it makes available to the PCP 210 for altering a print time control number, i.e. the Dot Time Count Reference number (Figure 16), which is used to generate a print control signal whose time duration is proportional to the Dot Time Count Reference number. The print control signal thus is used to drive, i.e. to switch on the print head drivers 220 to set the time of the voltage pulse driving and printing elements.

In the present thermal line printer, the print head drivers each comprise a switching circuit which is switched "on" to pass current through a circuit which includes a corresponding printing element. Each head driver comprises such a switching circuit in association with a corresponding input gate and bistable memory element. Bistable memory element is setable to a "1" or a "0" value and controls the gate to pass or not to pass an applied print control signal through it to the switch circuit, selectably to drive thereby the switching circuit for the duration of the print control signal to switch voltage to the printing element. Thus, overall the entire set of head drivers can be considered as a register of memory elements each selectably controlling whether the corresponding switch can be actuated by the print contrcl signal pulse in accordance with the "1" or "0", i.e., print or non-print, values set into and stored in the "register".

The print control signal is thus an actuating signal determining the "on" time of the application of current to the printing element, causing the printing element to heat. The printing element is in close proximity, and in some instances in contact with the print medium, such a paper. Where thermally sensitive paper is used, the printing element, when heated, will cause the thermally sensitive paper to darken or to create an image comparable in shape to the printing element. The more heat that is generated during the print cycle, the more area on the paper is darkened. Similarly, in those thermal printing operations which employ a thermal ribbon, the thermal ribbon is moved or advanced adjacent to the paper to be imprinted, and the printing element is positioned opposite the thermal ribbon from the paper. When the printing element is heated by the application of voltage, adjacent coating of the thermal ribbon is melted by the heat of the printing element, and transferred onto the paper to create the darkened image. The longer that the voltage is applied to the printing element, the more of the ribbon coating adjacent the printing element will be melted and transferred onto the paper.

Thus, it may be appreciated that the width of the line created by one or more adjacent printing elements can be widened or narrowed by the corresponding increase or decrease in the amount of time that the printing element is being heated by the application of voltage in t he driving circuit. Consequently, the application of a longer or greater time duration print control signal pulse to the switch which switches current through the print element will correspondingly increase the width of the line printed by that printing element. Similarly, the width of the imprinted line can be narrowed by correspondingly decreasing the print control signal pulse duration.

The print control processor 210 also generates those signals necessary to control he sheet drive motor 80 which controls not only the advancement of the sheet, but also the advancement of the ribbon in those application where thermal ribbon is used. The signals to drive the sheet drive motor 80 are interfaced through the ribbon and paper drive feed drivers and interface 222. Through the same interface 222, signals from the sprocket and label edge detector are received by the PCP 210, which generates the signals necessary to advance the sheet and the thermal ribbon to position the labels or other portion of the sheet to be printed in juxtaposed with the print head before signals from the PCT 210 actuate the print head drivers 220.

The MCP 209, on the basis of the comparison of the widths of the actually printed bars and their spaces with the predetermined measured widths, and of the print deviation resulting from this comparison, determines whether the deviation is within or not within tolerances. In the event that the deviation is not within tolerances, a command flows to alarm/voider drivers 224 to generate a signal to the "void" stamp solenoid, and to such other alarm indications as may be employed, such an alarm light, alarm sounds and the like.

This application describes matter claimed in copending application No 85 308613.0 from which this application is divided.

## Claims

1. A method of determining in a printer (10) the leading edge of each of a series of successively positioned labels (158), and moving the labels into position adjacent printing elements within the printer, comprising the steps of moving each label (158) successively through a first light path comprised of a first light source (148A) and a first photodetector (150A) capable of detecting light through the label; producing a first electrical signal representative of the change in opacity when an edge of a label is moved through the first light path; producing a second electrical signal and comparing the first electrical signal with the second electrical signal, and initiating a print operation routine to operate the printer (10) to print indicia (12) on said label (158) when said label is positioned adjacent the printing elements; characterised in that said second electrical signal is produced by moving said label through a second light path spaced from said first light path in the direction of label movement and comprised of a second light source (148B) and a second photodetector (150B) capable of detecting light through said, label, said second electrical signal being representative of the change in opacity when said edge of said label is moved through the second light path; and in that a digital initiate signal for initiating the print operation routine in a control processor is produced from said first and second electrical signals by comparing the instantaneous values of said first and second electrical signals to obtain a difference signal resulting from the time delay between the changes in opacity caused by the edge of said label interrupting the first and subsequently the second light path.

2. A method as claimed in claim 1, further comprising the steps of incrementally advancing the individual labels (158) from the first and second light paths a predetermined distance along a label path to the position adjacent the printing elements by a stepper motor (80).

3. A method as claimed in claim 1 or 2, in which each of the labels (158) is positioned upon a longitudinally extended carrier sheet which is advanced along a sheet travel path by an incrementally advancing motor means (80), and in which said first and second photodetectors (150A and 150B) are capable of detecting light through the carrier sheet and the labels (158), and in which the first and the second electrical signals are each representative of the change in opacity from the carrier sheet without the label (158) thereupon to the carrier sheet with the label thereupon.

4. A method as claimed in any one of claims 1 to 3, in which, after each of the steps of producing the first and the second electrical signals, the electrical signals are not compared unless each of the electrical signals exceeds a predetermined minimum voltage representative of a minimum change in opacity.

## Patentansprüche

1. Verfahren, das in einem Drucker (10) die Vorderkante jedes Etiketts einer Folge von aufeinanderfolgend positionierten Etiketten (158) ermittelt und die Etiketten in Positionen neben Druckelemente in dem Drucker bewegt, und folgende Schritte aufweist:
sukzessive Bewegung jedes Etiketts (158) durch einen ersten Lichtweg, der eine erste Lichtquelle (148A) und einen ersten Lichtdetektor (150A) umfaßt, und der durch das Etikett gehendes Licht erfassen kann;
Erzeugung eines ersten elektrischen Signals, das die Änderung der Deckfähigkeit angibt, wenn eine Kante eines Etiketts durch den ersten Lichtweg bewegt wird;
Erzeugung eines zweiten elektrischen Signals und Vergleich des ersten elektrischen Signals mit dem zweiten elektrischen Signal und Einleiten einer Druckoperaticnsroutine zum Betrieb des Druckers (10), um Kennmarken (12) auf das Etikett (158) zu drucken, wenn das Etikett neben den Druckelementen liegt; **dadurch gekennzeichnet, daß** das zweite elektrische Signal bei der Bewegung des Etiketts durch einen zweiten vom ersten Lichtweg in Richtung der Etikettenbewegung beabstandeten Lichtweg erzeugt wird, der eine zweite Lichtquelle (148B) und einen zweiten Lichtdetektor (150B) umfaßt, der durch das Etikett gehendes Licht erfassen kann,
das zweite elektrische Signal die Änderung der Deckfähigkeit beim Durchgang der Etikettenkante durch den zweiten Lichtweg angibt,
und daß aus dem ersten und zweiten elektrischen Signal ein digitales Einleitungssignal zur Einleitung der Druckoperationsroutine in einem Steuerprozessor durch einen Vergleich der Momentanwerte des ersten und zweiten elektrischen Signals erzeugt wird, um ein Differenzsignal zu erhalten, welches sich aus der Zeitverzögerung zwischen den Änderungen der Deckfähigkeit ergibt, wenn die Kante des Etiketts den ersten und darauf den zweiten Lichtweg unterbricht.

2. Verfahren nach Anspruch 1, welches weiterhin Schritte zum inkrementellen Vorschub der einzelnen Etiketten (158) von dem ersten und zweiten Lichtweg um eine vorgegebene Distanz entlang eines Etikettenwegs bis zu der den Druckelementen benachbarten Position mittels eines Schrittmotors (80) aufweist.

3. Verfahren nach Anspruch 1 oder 2, bei dem die Etiketten (158) auf einem sich in Längsrichtung erstreckenden Trägerblatt angebracht sind, welches durch einen den inkrementellen Vorschub bewirkenden Motor (80) längs eines Blattvorschubwegs verschoben wird,
bei dem der erste und zweite Lichtdetektor (150A) und (150B) durch das Trägerblatt und die Etiketten (158) gehendes Licht erfassen können, und
bei dem das erste und das zweite elektrische Signal jeweils die Veränderung der Deckfähigkeit des Trägerblatts ohne darauf angebrachtem Etikett (158) zum Trägerblatt mit darauf angebrachtem Etikett angeben.

4. Verfahren nach einem der Ansprüche bis 3, bei dem nach jedem der das erste und zweite elektrische Signal erzeugenden Schritte die elektrischen Signale so lange nicht miteinander verglichen werden, bis jedes von ihnen eine vorgegebene minimale Spannung überschreitet, welche eine minimale Deckfähigkeitsänderung angibt.

## Revendications

1. Procédé pour déterminer, dans une imprimante (10), le bord avant de chacune d'une série d'étiquettes positionnées successivement (158), et pour amener les étiquettes dans une position adjacente aux éléments d'impression à l'intérieur de l'imprimante, comprenant les étapes consistant à déplacer chaque étiquette (158) successivement à travers un premier chemin de lumière composé d'une première source de lumière (148A) et d'un premier photodétecteur (150A) capable de détecter de la lumière à travers l'étiquette; produre un premier signal électrique représentatif du changement d'opacité lorsque le bord d'une étiquette est déplacé à travers le premier chemin de lumière; produire un deuxième signal électrique et comparer le premier signal électrique au deuxième signal électrique, et déclencher une procédure d'opération d'impression pour actionner l'imprimante (10) de telle sorte qu'elle imprime des indications (12) sur ladite étiquette (158) lorsque ladite étiquette est positionnée au voisinage des éléments d'impression; caractérisé en ce que ledit deuxième signal électrique est produit en déplaçant ladite étiquette à travers un deuxième chemin de lumière espacé dudit premier chemin de lumière dans la direction de déplacement des étiquettes et comprenant une deuxième source de lumière (148B) et un deuxième photodétecteur (150B) capable de détecter de la lumière à travers ladite étiquette, ledit deuxième signal électrique étant représentatif du changement d'opacité lorsque ledit bord de ladite étiquette est déplacé à travers le deuxième chemin de lumière; et en ce qu'un signal de déclenchement numérique pour déclencher la procédure d'opération d'impression dans un processeur de commande est produit à partir desdits premier et deuxième signaux électriques en comparant les valeurs instantanées desdits premier et deuxième signaux électriques afin d'obtenir un signal de différence résultant du délai de temps entre les changements d'opacité provoqués par l'interruption par le bord de ladite étiquette du premier chemin de lumière, et, ensuite, du deuxième chemin de lumière.

2. Procédé selon la revendication 1, comprenant de plus les étapes d'avance par incréments des étiquettes individuelles (158), à partir des premier et deuxième chemins de lumière, d'une distance prédéterminée le long d'un chemin d'étiquette vers la position adjacente aux éléments d'impression, à l'aide d'un moteur pas à pas (80).

3. Procédé selon la revendication 1 ou 2, dans lequel chacune des étiquettes (158) est positionnée sur une feuille de support s'étendant longitudinalement que font avancer le long d'un chemin de déplacement de feuille des moyens formant moteur d'avance par incréments (80), et dans lequel lesdits premier et deuxième photodétecteurs (150A et 150B) sont capables de détecter de la lumière à travers la feuille de support et les étiquettes (158), et dans lequel les premier et deuxième signaux électriques sont chacun représentatifs du changement d'opacité entre la feuille de support sans l'étiquette (158) sur celle-ci et la feuille de support avec l'étiquette sur celle-ci.

4. Procédé selon l'une quelconque des revendications 1 à 3, dans lequel, après chacune des étapes de production des premier et deuxième signaux électriques, les signaux électriques ne sont pas comparés à moins que chacun des signaux électriques dépasse une tension minimale prédéterminée représentative d'un changement minimal d'opacité.
